Europäisches Patentamt

(19) **European Patent Office**

Office européen des brevets

(11) Veröffentlichungsnummer: **0 063 674**
**B1**

(12) # EUROPÄISCHE PATENTSCHRIFT

(45) Veröffentlichungstag der Patentschrift:
17.04.85

(51) Int. Cl.⁴: **B 23 B 21/00**

(21) Anmeldenummer: 82100866.1

(22) Anmeldetag: 06.02.82

(54) Support für das Drehen von tiefen Ringnuten.

(30) Priorität: 25.04.81 DE 8112300 U

(43) Veröffentlichungstag der Anmeldung:
03.11.82 Patentblatt 82/44

(45) Bekanntmachung des Hinweises auf die Patenterteilung:
17.04.85 Patentblatt 85/16

(84) Benannte Vertragsstaaten:
CH DE FR GB IT LI

(56) Entgegenhaltungen:
DE - A - 2 338 148
DE - C - 977 349
DE - U - 8 112 300
FR - A - 1 199 708
US - A - 3 469 476
US - A - 4 055 095

MACHINES & TOOLING, Band 45, Nr. 7, 1974,
Leicestershire, N.V. NAUMOV "Increasing the
machining accuracy of NC lathes", Seiten 13, 14

(73) Patentinhaber: Hoesch Maschinenfabrik Deutschland
Aktiengesellschaft, Borsigstrasse 22,
D-4600 Dortmund 1 (DE)

(72) Erfinder: Sauerwald, Walter, Ing. grad., Kebbestrasse 24,
D-4600 Dortmund (DE)
Erfinder: Schmidts, Klaus, Ludolfweg 2,
D-4600 Dortmund 70 (DE)
Erfinder: Weck, Bernd, Dipl.-Ing., Am Wiegert 1,
D-6941 Gorxheimertal (DE)

(74) Vertreter: Kremser, Manfred, Dipl.-Ing.,
Eberhardstrasse 12, D-4600 Dortmund 1 (DE)

## Beschreibung

Die Erfindung bezieht sich auf einen Support einer Drehmaschine, insbesondere für das Drehen von tiefen Ringnuten, enthaltend einen in Planvorschubvorrichtung bewegbaren Drehwerkzeugträger in Balkenform mit einer Werkzeugaufnahme und mindestens einem Drehwerkzeug sowie einem Spannelement für das Verspannen des Drehwerkzeuges mit der Werkzeugaufnahme.

Ein derartiger Support ist durch die DE-PS 977 349 bekannt.

Bei Einsatz eines solchen Supports für die Seitenbearbeitung von zum Werkstückinneren hin breiter werdenden Ringnuten muß für das Wechseln der Drehwerkzeuge ein verhältnismäßig großer Zeitaufwand in Kauf genommen werden. Dieser Zeitaufwand ist im Vergleich zur Gesamtbearbeitungszeit besonders ungünstig, wenn sich die Drehwerkzeuge nur innerhalb der Ringnut wechseln lassen.

Der Erfindung liegt die Aufgabe zugrunde, einen Drehwerkzeugträger mit auswechselbaren Drehwerkzeugen für die Seitenbearbeitung von zum Werkstückinneren hin breiter werdenden Ringnuten so zu gestalten, daß die Drehwerkzeuge sowohl in Normal- als auch in Überkopfdrehstellung mit sehr geringem Zeitaufwand gewechselt werden können.

Erfindungsgemäß wird diese Aufgabe dadurch gelöst, daß der Drehwerkzeugträger eine dreh- und verschiebbare Spannstange aufweist, durch deren Drehung ein Schwenken des Drehwerkzeuges und durch deren Verschiebung ein Festspannen des Drehwerkzeuges erfolgt, wobei die Schwenkachse des Drehwerkzeuges, die mit der Achse der Spannstange zusammenfällt, senkrecht zur Längsvorschubrichtung angeordnet ist.

Zweckmäßige Ausgestaltungen der Erfindung ergeben sich aus den Unteransprüchen 2 bis 16.

Die erfindungsgemäße Ausführung gestattet in jedem Bearbeitungsfall einen Wechsel der Drehwerkzeuge außerhalb der Ringnut. Hierdurch ist es möglich, den Wechsel der Drehwerkzeuge in an sich bekannter Weise zu automatisieren.

Im folgenden wird die Erfindung anhand einer Zeichnung, in der ein Ausführungsbeispiel schematisch dargestellt ist, näher beschrieben. Es zeigt

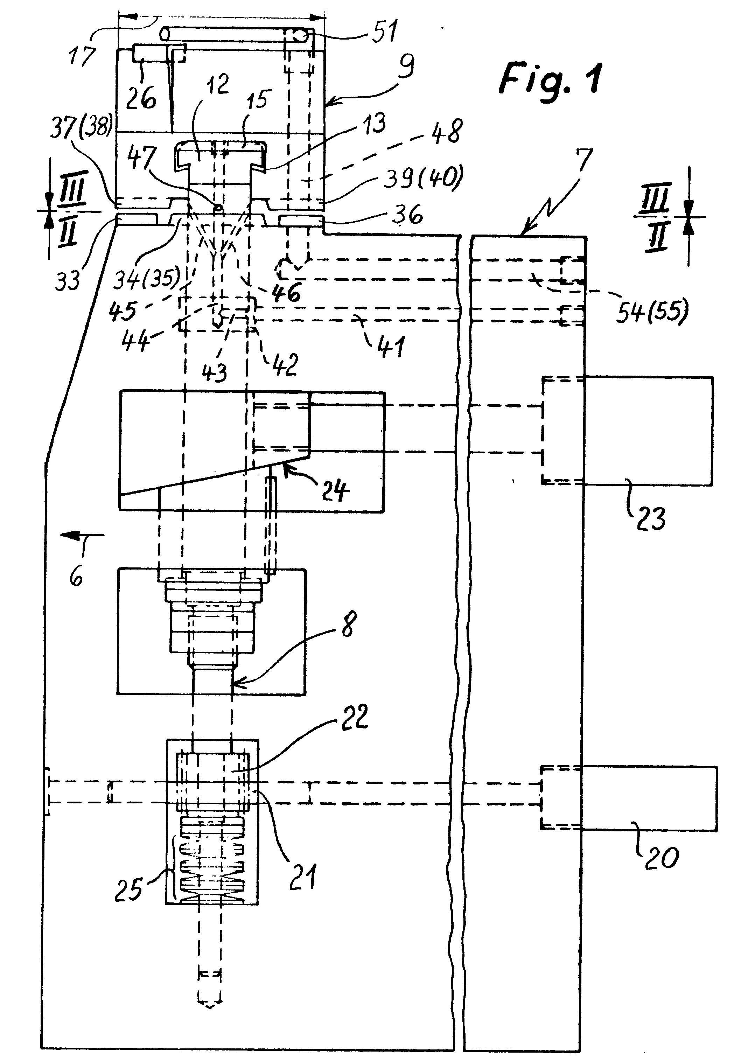

Fig. 1 einen Drehwerkzeugträger mit einer Spannstange und einem Drehwerkzeug in Ansicht,

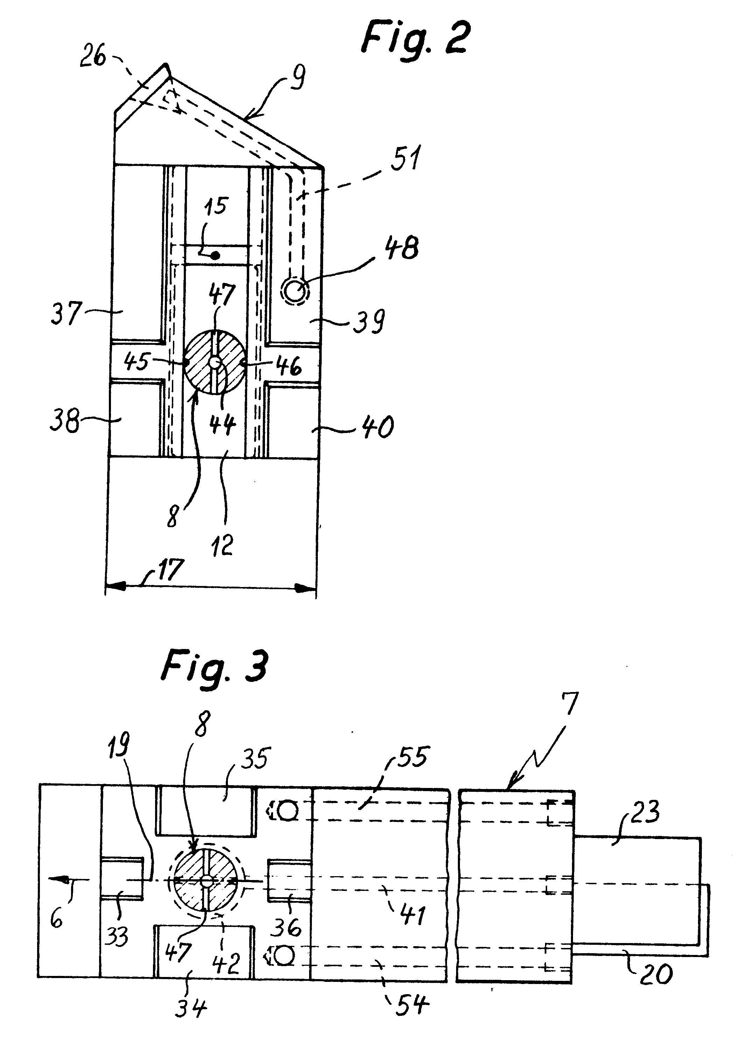

Fig. 2 einen Schnitt entsprechend der Linie II-II in Fig. 1,

Fig. 3 einen Schnitt entsprechend der Linie III-III in Fig. 1,

Fig. 4 einen Teilschnitt durch ein Werkstück und den vorderen Teil des Drehwerkzeugträgers mit einem Drehwerkzeug im Grundriß.

Ein Werkstück 1 mit einer vorbearbeiteten Ringnut 2, die im Innern des Werkstücks 1 breiter als im Werkstückaußenbereich 3 ist, soll durch Drehen eine Kontur entsprechend der Strich-Doppelpunkt-Linie 4 erhalten. Als Rotationsachse des Werkstücks 1 gilt die strichpunktierte Linie 5.

Für die Drehbearbeitung ist ein in einem Supportgehäuse (nicht dargestellt) höhenverstellbarer und in Planvorschubrichtung 6 bewegbarer Drehwerkzeugträger 7 mit einer dreh- und verschiebbaren Spannstange 8 zum Schwenken und Festspannen der Drehwerkzeuge 9, 10 angeordnet. Der Drehwerkzeugträger 7, der in Normal- und in Überkopfdrehstellung zum Drehen der Ringnut 2 eingesetzt werden kann, ist schmaler gehalten als die im Werkstückaußenbereich 3 vorgegebene Breite 11 der Ringnut 2.

Die Spannstange 8 enthält einen T-förmigen Spannkopf 12, auf den jedes Drehwerkzeug 9, 10 mit seiner T-förmigen Ausnehmung 13, 14 aufsteckbar ist. Die Aufsteckbewegung eines Drehwerkzeuges 9, 10 wird begrenzt durch einen angeschraubten Anschlag 15, 16.

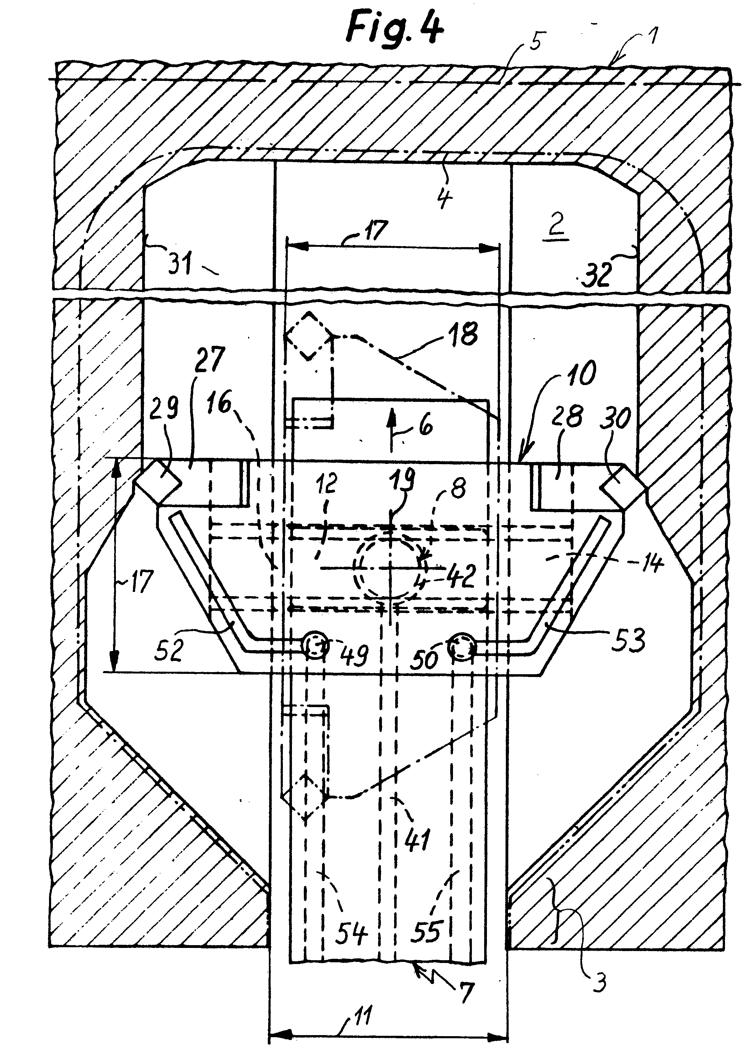

Die Drehwerkzeuge 9, 10 sind mit gleicher Länge 17 ausgeführt, die gegenüber der Breite 11 der Ringnut 2 kleiner ist. In Fig. 4 ist die Länge 17 auch in die strichpunktiert dargestellte Aufsteckposition 18 des Drehwerkzeuges 10 eingetragen.

Das vorliegende Ausführungsbeispiel sieht eine senkrechte Lagerung der Spannstange 8 in der Mitte 19 des Drehwerkzeugträgers 7 vor. Die Schwenkbewegung für das auf den Spannkopf 12 aufgesteckte Drehwerkzeug 9, 10 erzeugt eine Verschiebevorrichtung 20 über eine Geradzahnstange 21 und ein mit der Spannstange 8 verbundenes Ritzel 22. Festgespannt wird das Drehwerkzeug 9, 10 auf den Drehwerkzeugträger 7 über ein von einer Verschiebevorrichtung 23 angetriebenes Keilgetriebe 24, das mit Tellerfedern 25 vorgespannt ist.

Zum Drehwerkzeug 9 gehört eine Schneide 26 aus Hartmetall. Das Drehwerkzeug 10 ist mit zwei kurzen Schaftwerkzeugen 27, 28 bestückt, deren Schneiden 29, 30 eine gleichzeitige Bearbeitung beider Seitenflächen 31, 32 der Ringnut 2 gestatten. Im dargestellten Ausführungsbeispiel (Fig. 4) sind beide Schneiden 29, 30 symmetrisch zur Mitte 19 des Drehwerkzeugträgers 7 angeordnet.

Der Drehwerkzeugträger 7 und das Drehwerkzeug 9, 10 bilden einen Stoß in Form einer Klauenkupplung, wobei beide Stoßhälften je vier um 90° versetzte Klauen 33, 34, 35, 36; 37, 38, 39, 40 mit trapezförmigem Querschnitt aufweisen. Der Drehwerkzeugträger 7 und das Drehwerkzeug 9, 10 können auch einen Stoß in Form einer Kupplung mit Hirth-Stirn-Verzahnung bilden.

Vor dem Festspannen des Drehwerkzeuges 9, 10 werden die Klauen 33 bis 40 mit einem Spülmittel gereinigt. Als Spülmittel wird vorzugsweise Preßluft eingesetzt, die über eine Bohrung 41 und eine ringförmige Ausnehmung 42 in die Bohrungen 43, 44, 45, 46, 47 der Spannstange 8 gelangt.

Ein Schneid- und Kühlmittel wird jeder Schneide 26, 29, 30 über je eine in das Drehwerkzeug 9, 10 eingelassene Bohrung 48, 49, 50 und ein rohrförmiges Anschlußstück 51, 52, 53 zugeführt. Der Drehwerkzeugträger 7 enthält im Innern zwei Zuführungen 54, 55 für das Schneid- und Kühlmittel.

## Patentansprüche

1. Support einer Drehmaschine, insbesondere für das Drehen von tiefen Ringnuten, enthaltend einen in Planvorschubrichtung (6) bewegbaren Drehwerkzeugträger (7) in Balkenform mit einer Werkzeugaufnahme und mindestens einem Drehwerkzeug (9, 10) sowie einem Spannelement für das Verspannen des Drehwerkzeuges (9, 10) mit der Werkzeugaufnahme, dadurch gekennzeichnet, daß der Drehwerkzeugträger (7) eine dreh- und verschiebbare Spannstange (8) aufweist, durch deren Drehung ein Schwenken des Drehwerkzeuges (9, 10) und durch deren Verschiebung ein Festspannen des Drehwerkzeuges (9, 10) erfolgt, wobei die Schwenkachse des Drehwerkzeuges (9, 10), die mit der Achse der Spannstange (8) zusammenfällt, senkrecht zur Längsvorschubrichtung angeordnet ist.

2. Support nach Anspruch 1, dadurch gekennzeichnet, daß die Spannstange (8) einen T-förmigen Spannkopf (12) aufweist, auf den das Drehwerkzeug (9, 10) aufsteckbar ist.

3. Support nach den Ansprüchen 1 und 2, dadurch gekennzeichnet, daß das Drehwerkzeug (9, 10) einen Anschlag (15, 16) aufweist.

4. Support nach einem oder mehreren der Ansprüche 1 bis 3, dadurch gekennzeichnet, daß die Spannstange (8) mittig in dem Drehwerkzeugträger (7) gelagert ist.

5. Support nach einem oder mehreren der Ansprüche 1 bis 4, dadurch gekennzeichnet, daß zur Erzeugung der Schwenkbewegung eine Verschiebevorrichtung (20) angeordnet ist, die über eine Geradzahnstange (21) ein mit der Spannstange (8) verbundenes Ritzel (22) antreibt.

6. Support nach einem oder mehreren der Ansprüche 1 bis 5, dadurch gekennzeichnet, daß zur Erzeugung der Spannbewegung eine mit einem Keilgetriebe (24) in Wirkverbindung stehende Verschiebevorrichtung (23) angeordnet ist.

7. Support nach einem oder mehreren der Ansprüche 1 bis 6, dadurch gekennzeichnet, daß zum gleichzeitigen Bearbeiten beider Seitenflächen (31, 32) der Ringnut (2) das Drehwerkzeug (10) mit zwei Schneiden (29, 30) ausgebildet ist.

8. Support nach Anspruch 7, dadurch gekennzeichnet, daß beide Schneiden (29, 30) symmetrisch zur Mitte (19) des Drehwerkzeugträgers (7) angeordnet sind.

9. Support nach Anspruch 7, dadurch gekennzeichnet, daß das Drehwerkzeug (10) mit zwei kurzen Schaftwerkzeugen (27, 28) bestückt ist.

10. Support nach einem oder mehreren der Ansprüche 1 bis 9, dadurch gekennzeichnet, daß der Drehwerkzeugträger (7) und das Drehwerkzeug (9, 10) einen Stoß in Form einer Klauenkupplung bilden.

11. Support nach Anspruch 10, dadurch gekennzeichnet, daß der Drehwerkzeugträger (7) und das Drehwerkzeug (9, 10) je vier um 90° versetzte Klauen (33, 34, 35, 36; 37, 38, 39, 40) mit trapezförmigem Querschnitt aufweisen.

12. Support nach einem oder mehreren der Ansprüche 1 bis 9, dadurch gekennzeichnet, daß der Drehwerkzeugträger (7) und das Drehwerkzeug (9, 10) einen Stoß in Form einer Kupplung mit Hirth-Stirn-Verzahnung bilden.

13. Support nach einem oder mehreren der Ansprüche 1 bis 12, dadurch gekennzeichnet, daß die Spannstange (8) Bohrungen (43, 44, 45, 46, 47) für ein Spülmittel aufweist.

14. Support nach einem oder mehreren der Ansprüche 1 bis 13, dadurch gekennzeichnet, daß der Drehwerkzeugträger (7) eine Bohrung (41) und eine ringförmige Ausnehmung (42) für die Spülmittelzuführung aufweist.

15. Support nach einem oder mehreren der Ansprüche 1 bis 14, dadurch gekennzeichnet, daß das Drehwerkzeug (9, 10) für jede Schneide (26, 29, 30) eine Bohrung (48, 49, 50) und ein rohrförmiges Anschlußstück (51, 52, 53) als Zuleitung für ein Schneid- und Kühlmittel aufweist.

16. Support nach einem oder mehreren der Ansprüche 1 bis 15, dadurch gekennzeichnet, daß der Drehwerkzeugträger (7) im Innern mit zwei Zuführungen (54, 55) für ein Schneid- und Kühlmittel ausgebildet ist.

## Claims

1. Support for a lathe, in particular for the turning of deep annular grooves, including a lathe tool support (7) in the form of a beam movable in the transverse feed direction (6) with a tool carrier and at least one lathe tool (9, 10) as well as a clamping element for clamping the lathe tool (9, 10) together with the tool carrier, characterized in that the lathe tool support (7) has a rotatable and movable clamping rod (8), rotation of which causes pivoting of the lathe tool (9, 10) and movement of which results in fixed clamping of the lathe tool (9, 10), the pivot axis of the lathe tool (9, 10), which coincides with the axis of the clamping rod (8), being arranged perpendicularly to the longitudinal feed direction.

2. Support according to claim 1, characterized in that the clamping rod (8) has a T-shaped clamping head (12), on which the lathe tool (9, 10) can be placed.

3. Support according to claims 1 and 2, characterized in that the lathe tool (9, 10) has a stop (15, 16).

4. Support according to one or more of claims 1 to 3, characterized in that the clamping rod (8) is journalled at its middle in the lathe tool support (7).

5. Support according to one or more of claims 1 to 4, characterized in that, in order to produce the pivoting movement, a displacement device (20) ist provided, which drives a pinion connected to the clamping rod (8) by way of a straight gear rack (21).

6. Support according to one or more of claims 1 to 5, characterized in that, in order to produce the clamping movement, a displacement device (23) is arranged in operative connection with a wedgedrive (24).

7. Support according to one or more of claims 1 to 6, characterized in that the lathe tool (10) is formed with two cutters (29, 30) for working on both side surfaces (31, 32) of the annular groove (2) simultaneously.

8. Support according to claim 7, characterized in that the two cutters (29, 30) are arranged symmetrically with respect to the middle (19) of the lathe tool support (7).

9. Support according to claim 7, characterized in that the lathe tool (10) is fitted with two short shaft tools (27, 28).

10. Support according to one or more of claims 1 to 9, characterized in that the lathe tool support (7) and the lathe tool (9, 10) form a joint in the form of a claw coupling.

11. Support according to claim 10, characterized in that the lathe tool support (7) and the lathe tool (9, 10) each have four claws (33, 34, 35, 36; 37, 38, 39, 40), mutually displaced by 90° and having trapezoidal cross-sections.

12. Support according to one or more of claims 1 to 9, characterized in that the lathe tool support (7) and the lathe tool (9, 10) form a joint in the form of a coupling with Hirth-type face teeth.

13. Support according to one or more of claims 1 to 12, characterized in that the clamping rod (8) has bores (43, 44, 45, 46, 47) for a scavenging agent.

14. Support according to one or more of claims 1 to 13, characterized in that the lathe tool support (7) has a bore (41) and an annular groove (42) for supplying the scavenging agent.

15. Support according to one or more of claims 1 to 14, characterized in that the lathe tool (9, 10) has a bore (48, 49, 50) for each cutter (26, 29, 30) and a tubular connecting piece (51, 52, 53) as a supply conduit for a cutting and cooling medium.

16. Support according to one or more of claims 1 to 15, characterized in that the lathe tool support (7) is formed internally with two supply conduits (54, 55) for a cutting and cooling medium.

## Revendications

1. Support de tour, en particulier pour le tournage de rainures annulaires profondes, comportant un porte-outil de tournage (7) en forme de poutre, pouvant se déplacer dans une direction d'avance transversale (6), avec un logement d'outil et au moins un outil (9, 10), ainsi qu'un élément de serrage en vue de serrer cet outil (9, 10) sur ce logement, caractérisé en ce que le porte-outil de tournage (7) comporte une tige de serrage (8) déplaçable en translation et en rotation, dont la rotation entraîne un pivotement de l'outil de tournage (9, 10), et dont la translation entraîne un serrage de l'outil de tournage (9, 10), l'axe transversal de l'outil de tournage (9, 10), qui coïncide avec l'axe de la tige de serrage (8), étant disposé perpendiculairement à la direction d'avance longitudinale.

2. Support suivant la revendication 1, caractérisé en ce que la tige de serrage (8) comporte une tête de serrage en T (12) sur laquelle l'outil de tournage (9, 10) peut être enfiché.

3. Support suivant les revendications 1 et 2, caractérisé en ce que l'outil de tournage (9, 10) comporte une butée (15, 16).

4. Support suivant une ou plusieurs des revendications 1 à 3, caractérisé en ce que la tige de serrage (8) est montée au milieu du porte-outil de tournage (7).

5. Support suivant une ou plusieurs des revendications 1 à 4, caractérisé en ce que, pour effectuer le mouvement de pivotement, on prévoit un dispositif de déplacement (20) qui, via une crémaillère rectiligne (21), entraîne un pignon (22) associé à la tige de serrage (8).

6. Support suivant une ou plusieurs des revendications 1 à 5, caractérisé en ce que, pour effectuer le mouvement de serrage, on prévoit un dispositif de déplacement (23) coopérant activement avec un engrenage cunéiforme (24).

7. Support suivant une ou plusieurs des revendications 1 à 6, caractérisé en ce que, pour l'usinage simultané de deux surfaces latérales (31, 32) de la rainure annulaire (2), l'outil de tournage (10) est réalisé avec deux tranchants (29, 30).

8. Support suivant la revendication 7, caractérisé en ce que les deux tranchants (29, 30) sont disposés symétriquement par rapport au centre (19) du porte-outil de tournage (7).

9. Support suivant la revendication 7, caractérisé en ce que l'outil de tournage (10) est équipé de deux outils à queue de courte longueur (27, 28).

10. Support suivant une ou plusieurs des revendications 1 à 9, caractérisé en ce que le porte-outil (7) et l'outil de tournage (9, 10) forment une jointure sous forme d'un accouplement à griffes.

11. Support suivant la revendication 10, caractérisé en ce que le porte-outil (7) et l'outil de tournage (9, 10) comportent chacun quatre griffes décalées de 90° (33, 34, 35, 36; 37, 38, 39, 40) et ayant une section transversale trapézoïdale.

12. Support suivant une ou plusieurs des revendications 1 à 9, caractérisé en ce que le porte-outil (7) et l'outil de tournage (9, 10) forment une jointure sous forme d'un accouplement à crantage de Hirth-Stirn.

13. Support suivant une ou plusieurs des revendications 1 à 12, caractérisé en ce que la tige de serrage (8) comporte des trous (43, 44, 45, 46, 47) pour un fluide de lavage.

14. Support suivant une ou plusieurs des revendications 1 à 13, caractérisé en ce que le porte-outil de tournage (7) comporte un trou (41) et un évidement annulaire (42) pour l'alimentation du fluide de lavage.

15. Support suivant une ou plusieurs des revendications 1 à 14, caractérisé en ce que, pour chaque tranchant (26, 29, 30), l'outil de tournage (9, 10) comporte un trou (48, 49, 50) et un raccord tubulaire (51, 52, 53) pour l'alimentation d'un agent de découpage et de refroidissement.

16. Support suivant une ou plusieurs des revendications 1 à 15, caractérisé en ce que le porte-outil de tournage (7) est réalisé, à l'intérieur, avec deux alimentations (54, 55) pour un agent de découpage et de refroidissement.

0 063 674

Fig. 1

7

# *Fig. 2*

# *Fig. 3*

Fig.4